# EUROPÄISCHE PATENTSCHRIFT

(11) **EP 3 214 410 B1**
(45) Veröffentlichungstag und Bekanntmachung des Hinweises auf die Patenterteilung: **06.05.2020**
(21) Anmeldenummer: 17157262.1
(22) Anmeldetag: 21.02.2017
(51) Int. Cl.: G01D 5/24

(54) **ZYLINDER MIT EINEM OPTISCHEN POSITIONSSENSOR**
CYLINDER WITH AN OPTICAL POSITION SENSOR
CYLINDRE COMPRENANT UN CAPTEUR DE POSITION OPTIQUE

(30) Priorität: 02.03.2016 DE 102016103721
(43) Veröffentlichungstag der Anmeldung: 06.09.2017
(73) Patentinhaber: Jungheinrich Aktiengesellschaft, 22047 Hamburg (DE)
(72) Erfinder: Geilsdorf, Hendrik, 22417 Hamburg (DE); Schuchard, Michael, 24558 Henstedt-Ulzburg (DE)
(74) Vertreter: Hauck Patentanwaltspartnerschaft mbB

(56) Entgegenhaltungen:
- EP-A- 0 246 404
- EP-A1- 0 696 722
- WO-A-92/04598
- DE-A1- 2 416 212
- DE-A1- 10 257 955
- US-B1- 6 184 518

## Beschreibung

Die vorliegende Erfindung betrifft einen Zylinder mit einer in Längsrichtung verfahrbaren Kolbenstange und einem optischen Positionssensor, der auf eine an der Kolbenstange angeordnete Markierung gerichtet ist.

Für eine Positionsmessung an der Kolbenstange eines Zylinders ist bekannt, inkrementell, ausgehend von einer Referenzmarke, die Position zu erfassen. Eine solche Markierung besitzt den Nachteil, dass je nach Position der Kolbenstange beim Start der Messung mitunter eine lange Referenzfahrt erforderlich ist, um die Referenzposition zu erfassen, von der aus die inkrementelle Messung erfolgt.

Ebenso bekannt sind absolut messende Systeme, bei denen die Markierung auf der Kolbenstange einen Code trägt, mit dem die Absolutposition angegeben ist. Als nachteilig an dem bekannten Positionssensor ist, dass die Codierung der Position und der Aufbau des dafür notwendigen Sensors aufwendig sind.

Aus EP 2 222 966 B1 ist ein System zur Bestimmung der Position eines Kolbens entlang seinem Hubweg für einen fluiddynamischen Aktuator bekannt. Die Kolbenstange weist hierzu eine optisch erfassbare Markierung auf, wobei eine sich in Längsrichtung der Kolbenstange erstreckende Markierung unterschiedliche Segmente anzeigt und eine zweite, schräg zur Längsrichtung verlaufende Markierung die Position innerhalb der Segmente anzeigt.

Aus EP 0 635 115 ist eine Positionsskala mit Marken mit einer ersten und einer zweiten Breite bekannt. Eine vorbestimmte Anzahl von Marken wird zu einem Code zusammengefasst, wobei dann die Marken von erster und zweiter Breite die Position codieren.

Aus EP 1 426 737 ist eine Messeinrichtung bekannt, bei der eine binäre Ziffer durch einen Abstand zwischen zwei Marken codiert ist.

Aus WO 84/01027 ist eine Positionsmessvorrichtung bekannt, bei der zwei mit einem Code versehene Streifen relativ zueinander bewegt werden.

Aus DE 102 57 955 A1 ist ein Schwingungsdämpfer mit Dämpferwegmessung bekannt. An dem Schwingungsdämpfer ist eine Beleuchtungseinrichtung und eine Empfangseinrichtung eines optischen Messsystems angebracht, wobei das Messlicht der Beleuchtungseinrichtung auf ein weiteres, zu dem ersten Element relativ bewegbares Element des Schwingungsdämpfers trifft und das reflektierte Licht von der Beleuchtungseinrichtung des optischen Messsystems erfasst wird. Aus den erfassten Daten wird eine inkrementelle Verschiebungsgröße ermittelt. Zur Markierung ist eine linienförmige Farb-Strukturmarkierung vorgesehen, die eine Vielzahl von parallel zueinander angeordneten Linien aufweist. Der Abstand Δx zwischen benachbarten Linien von Linienpaar zu Linienpaar nimmt in einer Richtung kontinuierlich ab. Jede Linie stellt dabei eine Referenzposition dar, von denen eine einer Absolutposition des Schwingungsdämpfers zugeordnet ist, so dass bei einer Relativbewegung zwischen Kolbenstange und Behälterrohr ein inkrementeller Abstand bestimmt werden kann.

Aus WO 95/01510 ist ein Zylinder bekannt, dessen in Axialrichtung bewegliche Zylinderstange Mittel zur Positionsbestimmung aufweist. Diese Mittel bestehen aus Marken, die eine absolute Position an der Zylinderstange codieren. Hierdurch kann die Position der Zylinderstange auch bestimmt werden, wenn eine inkrementelle Messung scheitert. Aus WO92/04598 und US6,184,518 sind weitere optische Positionssensoren mit Inkremental- und Referenzmarken bekannt.

Der Erfindung liegt die Aufgabe zugrunde, einen Zylinder mit einer Kolbenstange bereitzustellen, deren Positionssensor in einfacher und robuster Weise die Position der Kolbenstange erfassen kann.

Erfindungsgemäß wird die Aufgabe durch eine Vorrichtung gemäß Anspruch 1 gelöst. Vorteilhafte Ausgestaltungen bilden den Gegenstand der Unteransprüche.

Die erfindungsgemäße Aufgabe wird durch einen Zylinder mit einer Kolbenstange und einen auf diese gerichteten optischen Positionssensor gelöst. Der Positionssensor ist auf eine an der Kolbenstange angeordnete Markierung gerichtet. Der Positionssensor ist dazu ausgebildet, ausgehend von einer Referenzmarke, inkrementell die Position der Kolbenstange zu erfassen. Erfindungsgemäß weist die Markierung mindestens drei Referenzmarken auf, deren paarweiser Abstand in axialer Richtung jeweils verschieden voneinander ist. Der paarweise Abstand bestimmt sich immer aus dem Abstand zwischen zwei, bevorzugt benachbarten Referenzmarken. Sind beispielsweise A, B, C Referenzmarken, so ergeben sich die paarweisen Abstände AB und BC, wobei auch der Abstand AC als ein paarweiser Abstand zwischen den Referenzmarken angesehen werden kann. Der Vorteil an der Verwendung von mehreren Referenzmarken liegt darin, dass für eine Referenzierung des Positionssensors und der Kolbenstange nur zwei benachbarte Referenzmarken überfahren werden müssen, und der zwischen diesen liegende Abstand, dadurch dass er von jedem anderen paarweisen Abstand verschieden ist, eindeutig die beiden Referenzmarken kennzeichnet. Erfindungsgemäß ist der paarweise Abstand zwischen zwei benachbarten Referenzmarken den Positionen der beiden Referenzmarken zugeordnet. So kann deren Position als Referenzposition vorgegeben werden, um hieran anschließend eine inkrementelle Messung vorzunehmen. Zwischen zwei Referenzmarken sind eine oder mehrere Abstandsmarken für eine inkrementelle Positionsmessung vorgesehen. Über die Abstandsmarken zwischen zwei benachbarten Referenzmarken können sowohl der Abstand zwischen den Referenzmarken gemessen als auch nach erfolgter Referenzierung die Bewegung der Kolbenstange zwischen zwei Referenzmarken erfasst werden. Indem mehrere Referenzmarken auf der Kolbenstange verteilt sind, können diese über eine kürzere Verfahrstrecke der Kolbenstange bei der Referenzierung angefahren werden.

In einer bevorzugten Ausgestaltung ist der Positionssensor dazu ausgebildet, aus einem Abstand zwischen zwei benachbarten Referenzmarken deren Position zu bestimmen. Die Berücksichtigung der Bewegungsrichtung gestattet es, eindeutig festzulegen, welche der beiden Referenzmarken zuerst und welche als zweite angefahren wurden. Der Vorteil liegt darin, dass nach Erfassen der zweiten Referenzmarke direkt deren Position bekannt ist. Bevorzugt ist der Positionssensor mit einer Auswerteeinheit ausgestattet, die die Abstände zwischen zwei Referenzmarken auswertet.

In einer bevorzugten Ausgestaltung sind die Abstandsmarken äquidistant zueinander ausgebildet. Bei der Verwendung von Abstandsmarken gleicher Breite kann somit durch Zählen der Abstandsmarken der zurückgelegte Abstand bestimmt werden.

Erfindungsgemäß besitzen die Abstandsmarken in axialer Richtung jeweils eine erste Breite. Sämtliche verwendeten Abstandsmarken besitzen die gleiche Breite. Erfindungsgemäß besitzen auch sämtliche Referenzmarken in axialer Richtung jeweils eine zweite, von der ersten Breite verschiedene Breite. Für eine sichere Unterscheidung können die Referenzmarken beispielsweise die doppelte Breite einer Abstandsmarke besitzen.

In einer besonders bevorzugten Ausgestaltung ist für den Zylinder mindestens eine Ruheposition vorgesehen und der paarweise Abstand zwischen benachbart zu der Ruheposition liegenden Referenzmarken kleiner als der paarweise Abstand von weiter von der Ruheposition entfernt liegenden Referenzmarken. Hierdurch wird sichergestellt, dass ausgehend von der Ruheposition des Zylinders nur eine kleine Verfahrstrecke erforderlich ist, um die gewünschte Referenzierung durchzuführen.

Die auf der Kolbenstange angeordnete Markierung kann entweder aus aufgebrachten Referenz- und/oder Abstandsmarken bestehen oder invertiert in einer durchgehenden Beschichtung bestehen, bei der die Referenz- und/oder Abstandsmarken als Unterbrechung in der Beschichtung ausgebildet sind. Bei der ersten Ausgestaltung wird die Markierung auf das in der Regel blanke Metall der Kolbenstange aufgetragen, beispielsweise durch einen Farbauftrag oder eine Oberflächenbearbeitung. In einer alternativen bzw. anderen Ausgestaltung werden die Marken der Markierung durch Aussparungen gebildet.

Eine bevorzugte Ausgestaltung der Erfindung wird nachfolgend an einem Ausführungsbeispiel erläutert. Es zeigen:
- Fig. 1: eine schematische Ansicht eines dreikanaligen, optischen Positionssensors im Zusammenspiel mit einer Markierung,
- Fig. 2: eine erfindungsgemäße Markierung mit fortlaufend zunehmendem Abstand zwischen zwei Referenzmarken,
- Fig. 3: eine erfindungsgemäße Markierung mit alternierend zunehmendem Abstand von einer zentralen Ruheposition aus,
- Fig. 4: eine zu Fig. 2 invertierte Markierung mit fortlaufend zunehmendem Abstand und
- Fig. 5: eine zu Fig. 3 invertierte Markierung mit alternierend zunehmendem Abstand von einer zentralen Ruheposition aus.

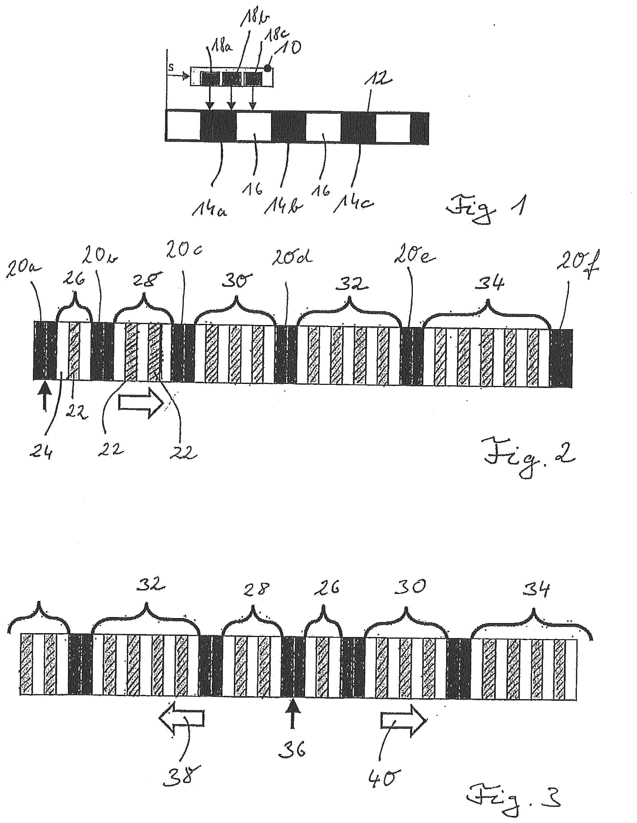

Fig. 1 zeigt in einer schematischen Ansicht einen optischen Positionssensor 10, der auf eine Markierung 12 gerichtet ist. Die Markierung 12 besitzt in dem in Fig. 1 gezeigten Ausschnitt Abstandsmarken 14a, 14b, 14c, die äquidistant, also in einem gleichen Abstand 16 zueinander angeordnet sind. Die Abstandsmarken 14 unterscheiden sich in ihren optischen Eigenschaften, beispielsweise in ihrem Reflexionsvermögen gegenüber der nichtmarkierten Kolbenstange. Der optische Sensor erfasst die Marken optisch, beispielsweise indem das reflektierte Licht ausbleibt. Um eine möglichst gute Ortsauflösung zu erzielen, Redundanz zu erreichen und die Bewegungsrichtung erkennen zu können, kann der optische Positionssensor 10 mit drei Sensoreinheiten 18a, 18b, 18c ausgestattet sein, die in axialer Richtung hintereinander versetzt sind. Jede der Sensoreinheiten weist eine Lichtquelle und ein zugeordnetes Fotoelement auf. Hierdurch kann auch eine Ortsauflösung erreicht werden, die deutlich kleiner als der Abstand 16 zwischen den Abstandsmarken 14 ist.

Fig. 2 zeigt eine erfindungsgemäße Markierung mit Referenzmarken 20a - 20f. Zwischen den Referenzmarken 20 befinden sich jeweils Abstandsmarken 22. Der Unterschied zwischen Abstandsmarke 22 und Referenzmarken 20 ist in den Fign. 2 und 3 zur Verdeutlichung hervorgehoben. In der praktischen Ausgestaltung können Referenz- und Abstandsmarken gleich im Hinblick auf ihre optischen Eigenschaften ausgebildet sein. Im Hinblick auf ihre Abmessungen sind die Referenzmarken 20 in axialer Richtung doppelt so breit wie die Abstandsmarken 22. Der Abstand 24 zwischen zwei aufeinanderfolgenden Marken, sei es nun Referenzmarke und Abstandsmarke oder Abstandsmarke und Abstandsmarke, ist immer gleich groß.

Wie in Fig. 2 dargestellt, ist der Zwischenraum 26 zwischen den Referenzmarken 20a und 20b kleiner als der Zwischenraum 28 zwischen den Referenzmarken 20b und 20c. Der Zwischenraum 28 verfügt über eine zusätzliche Abstandsmarke 22 mit einem entsprechenden Zwischenraum 24. Wie Fig. 2 zu entnehmen, wachsen die Zwischenräume 30 - 34 zwischen jeweils aneinander begrenzenden Referenzmarken.

Fig. 3 zeigt eine alternative Anordnung der Referenzmarken. Diese Anordnung ist so gewählt, dass ausgehend von einer zentralen Ruheposition 36 zunächst kürzere Abstände 26 und 28 vorliegen und hiervon ausgehend dann in Richtung der Pfeile 38, 40 größere Abstände auftreten. Bei der in Fig. 3 dargestellten Ausgestaltung sind die Referenzmarken mit den geringsten Abständen in der Nähe der Position 36 positioniert, bei der es sich beispielsweise um die wahrscheinlichste Startposition für den Zylinder handelt.

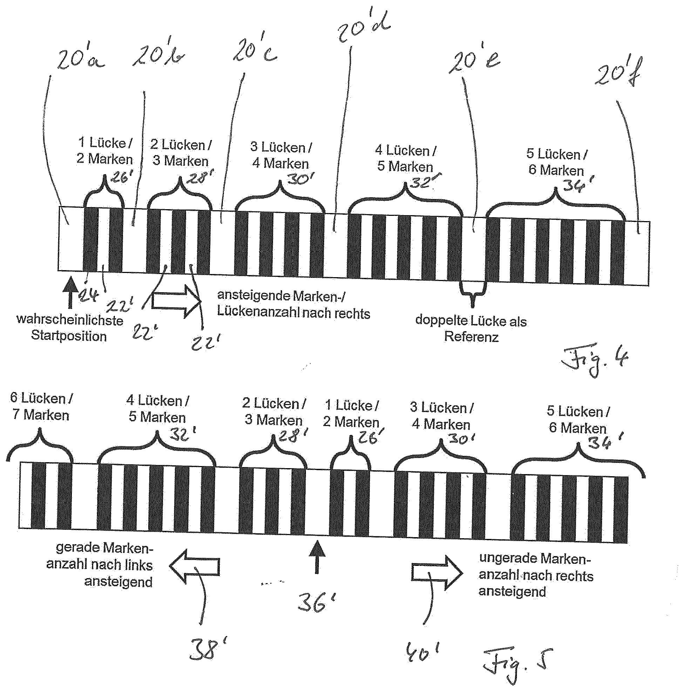

Fig. 4 zeigt eine dem Beispiel aus Fig. 2 entsprechende Markierung, die jedoch invertiert ist. Die Referenzmarken sind mit 20'a - 20'f bezeichnet. Jede der Referenzmarken ist als eine Lücke in der schwarz dargestellten Beschichtung dargestellt. Die Beschichtung kann in einer aufgetragenen Schicht bestehen oder in einer bearbeiteten Oberfläche. Die Abstandsmarken 22' werden zwischen den Referenzmarken 20'a - 20'f ebenfalls durch Lücken in der Markierung gebildet. Getrennt sind die die Marken bildenden Lücken jeweils durch eine schwarz dargestellte Beschichtung 24'. Durch die zunehmende Anzahl von Lücken 22' zwischen den Markierungen 20' entstehen in einer Richtung fortlaufend größere Abstände zwischen den Referenzmarken 20'a, 20'b und 20'c.

Die in Fig. 4 dargestellte Vorrichtung führt zu einer schnellen Referenzierung ohne unnötige Verfahrwege, wenn die wahrscheinlichste Startposition endseitig bei der Referenzmarke 20'a liegt. Eine solche endseitige Start-/Ruheposition kann sich beispielsweise aus der Verwendung des Zylinders ergeben, wenn dieser beispielsweise stets in einem ein- oder ausgefahrenen Zustand abzustellen ist.

Fig. 5 zeigt eine Fig. 3 entsprechende invertierte Markierung, bei der die Referenzmarke 36' eine mittige Lage besitzt. Hiervon ausgehend nehmen zu den beiden Bewegungsrichtungen 38' und 40' hin die Abstände alternierend zu. Dies bedeutet, der Abstand 26' ist kleiner als der Abstand 28', der wiederum kleiner als der Abstand 30' ist, der wiederum kleiner als der Abstand 32' ist.

Bei der Benutzung erfolgt eine Referenzfahrt, bei der zwei benachbarte Referenzmarken überfahren werden. Aus der Ermittlung eines Abstandes zwischen den Referenzmarken und dem Vergleich mit einer gespeicherten Liste, die einem Abstand der Referenzmarken eine Absolutposition der betroffenen Referenzmarken zuordnet, kann die aktuelle Ist-Position bestimmt werden. Hierbei wird bevorzugt auch die Bewegungsrichtung der Kolbenstange erfasst, um entscheiden zu können, an welcher der beiden Referenzmarken der optische Sensor sich in seiner Ist-Position befindet. Wobei die Erfassung der Bewegungsrichtung nur dann zwingend erforderlich ist, wenn die Richtung variieren kann. Ist stets eine feste Bewegungsrichtung vorgegeben, dann liegt eindeutig fest, welche Referenzmarke angefahren wurde.

Flurförderzeuge sind gemäß Anleitung immer mit abgesenkten Gabeln abzustellen, sodass sich der Zylinder im eingefahrenen Zustand befinden wird. Von dieser Position ausgehend, werden die Abstände zwischen den Referenzmarken in Kolbenlängsrichtung kontinuierlich zunehmen (vgl. Fig. 2). Der größte Abstand zwischen zwei Referenzmarken befindet sich dann am gegenüberliegenden Ende der Kolbenstange, so dass sich letztlich die Anordnung gemäß Fig. 2 zeigt.

Bei Zylindern für andere Anwendungen an einem Flurförderzeug, wie beispielsweise Lenkung, Seitenschub, Neigung etc. befindet sich die wahrscheinlichste Startposition eher in der Mitte des Zylinders. Hier werden die Referenzmarken mit den geringsten Abständen zueinander angeordnet (vgl. Fig. 3). Die Abstände werden dann zu den Enden der Kolbenstange hin größer, wobei die Abstände mit ungerader Anzahl an Abstandsmarken auf der einen Seite und Abstände mit einer geraden Anzahl von Abstandsmarken auf der anderen Seite angeordnet sind.

Mit der erfindungsgemäßen Anordnung können die Referenzmarken beliebig auf der Kolbenstange verteilt werden. Wichtig ist, dass jeder Abstand zwischen zwei Referenzmarken nur einmal auftritt, also eindeutig sind und dass die Abstände und ihre Positionen auf dem Kolben bekannt sein müssen.

Bei dem dargestellten Ausführungsbeispiel sind die Referenzmarken doppelt so breit wie die Abstandsmarken. Dies führt dazu, dass der optische Positionssensor im Bereich der Referenzmarken eine geringere Ortsauflösung hat. Dies kann ebenfalls als ein Kriterium für die Anordnung dienen, indem die Referenzmarken einen großen Abstand dort besitzen, wo eine gute Ortsauflösung für die Kolbenstange erforderlich ist.

Beim Starten kann in einem ersten Schritt die Absolutposition ermittelt werden. Hierzu werden zwei benachbarte Referenzmarken überfahren. Anhand des gemessenen Abstandes zwischen diesen wird mit einer im Speicher abgelegten Liste oder einer entsprechenden Berechnungsvorschrift die korrekte Absolutposition bestimmt. Hier sind zwei verschiedene Vorgehensweisen nach dem Einschalten möglich:
- Es wird standardmäßig eine Referenzfahrt in eine vorbestimmte Richtung durchgeführt. Dies kann dazu führen, dass die Referenzfahrt etwas länger als notwendig ist, wenn beispielsweise die Abstellposition direkt hinter einer Referenzmarke lag und die vorbestimmte Richtung in die andere Seite geht. Bei diesem Vorgehen kann die Absolutposition dann nur aufgrund des Abstandes ohne Berücksichtigung der Bewegungsrichtung erfolgen.
- Beim Abschalten wird in einer alternativen Vorgehensweise die letzte bekannte Position gespeichert. Diese gespeicherte Position wird verwendet, um nach dem Anschalten die Richtung der Referenzfahrt so auszuwählen, dass für die beiden zu überfahrenden Referenzmarken eine möglichst kurze Strecke ausgewählt wird.

In einer weiteren möglichen Ausgestaltung kann auch auf eine Referenzfahrt verzichtet werden und direkt der Zylinder eingesetzt werden, wobei dann dessen Absolutposition erst bekannt ist, wenn während des Betriebs zwei Referenzmarken überfahren wurden.

Die Berechnung der Position im laufenden Betrieb unterscheidet sich im Vergleich zur vorherigen Referenzfahrt, wenn auf der Skala verteilt mehrere Referenzmarken angebracht sind. Ein einfaches Zählen der gemessenen Impulse ist dann nicht mehr ausreichend. Vielmehr bietet sich die Möglichkeit an, sobald eine Referenzmarke erkannt wird, die aktuelle Position zusätzlich um die Breite der normalen Marke zu erhöhen oder zu verringern, je nach Bewegungsrichtung. Zwischen den Referenzmarken ist ein einfaches Zählen der Impulse ausreichend. Wird dann eine Referenzmarke erkannt, kann anhand des gemessenen Abstandes zur letzten Referenzmarke die Verbindung mit einer im Speicher abgelegten Liste oder einer entsprechenden Berechnungsvorschrift die korrekte Absolutposition, ähnlich wie beim Starten, bestimmt werden. So kann das System bei jeder Referenzmarke neu "geeicht" werden. Zwischen den Referenzmarken ist auch ein einfaches Zählen der Abstandsmarken ausreichend.

## Patentansprüche

1. Zylinder mit einer Kolbenstange und einem optischen Positionssensor (10), der auf eine an der Kolbenstange angeordnete Markierung (12) gerichtet ist, wobei der Positionssensor dazu ausgebildet ist, ausgehend von einer Referenzmarke inkrementell die Position der Kolbenstange zu erfassen, und die Markierung mindestens drei Referenzmarken (20a - 20f) aufweist, deren paarweise Abstände (26, 28, 30, 32, 34) in axialer Richtung jeweils verschieden voneinander sind,
**dadurch gekennzeichnet, dass**
der paarweise Abstand zwischen zwei benachbarten Referenzmarken eindeutig den Positionen der beiden Referenzmarken zugeordnet ist und zwischen zwei Referenzmarken Abstandsmarken (22) für eine inkrementelle Messung des Abstandes zwischen den beiden Referenzmarken vorgesehen sind, wobei alle Abstandsmarken in axialer Richtung jeweils eine erste Breite und alle Referenzmarken in axialer Richtung jeweils eine zweite, von der ersten Breite verschiedene Breite aufweisen.

2. Zylinder nach Anspruch 1, **dadurch gekennzeichnet, dass** der Positionssensor dazu ausgelegt ist, um aus einem Abstand zwischen einem Paar von Referenzmarken deren Positionen zu bestimmen.

3. Zylinder nach einem der Ansprüche 1 bis 2, **dadurch gekennzeichnet, dass** der paarweise Abstand zwischen zwei benachbarten Referenzmarken unter Berücksichtigung einer Bewegungsrichtung der Position einer der beiden benachbarten Referenzmarken zugeordnet ist.

4. Zylinder nach einem der Ansprüche 1 bis 3, **dadurch gekennzeichnet, dass** die Abstandsmarken äquidistant angeordnet sind.

5. Zylinder nach einem der Ansprüche 1 bis 4, **dadurch gekennzeichnet, dass** der Zylinder eine Ruheposition aufweist und der paarweise Abstand zwischen den benachbart zur Ruheposition liegenden Referenzmarken kleiner als der paarweise Abstand von weiter von der Ruheposition entfernt liegenden Referenzmarken ist.

6. Zylinder nach einem der Ansprüche 1 bis 5, **dadurch gekennzeichnet, dass** die auf der Kolbenstange angeordnete Markierung auf die Kolbenstange aufgebrachte Referenz- und/oder Abstandsmarken aufweist.

7. Zylinder nach einem der Ansprüche 1 bis 6, **dadurch gekennzeichnet, dass** die auf der Kolbenstange angeordnete Markierung eine durchgehende Beschichtung aufweist, die für die Referenz- und/oder Abstandsmarken unterbrochen ist.

## Claims

1. Cylinder with a piston rod and an optical positioning sensor (10) which is directed towards a marking (12) provided on the piston rod, wherein the positioning sensor is designed to detect the position of the piston rod incrementally starting from a reference mark, and the marking has at least three reference marks (20a - 20f), of which the pairwise spacings (26, 28, 30, 32, 34) are different from each other in the axial direction,
**characterized in that**
the pairwise spacing between two adjacent reference marks is unambiguously assigned to the positions of the two reference marks, and spacing marks (22) are provided between two reference marks for incremental measurement of the spacing between the two reference marks, all spacing marks in the axial direction each having a first width and all reference marks in the axial direction each having a second width different from the first width.

2. Cylinder according to claim 1, **characterized in that** the positioning sensor is adapted to determine the positions of a pair of reference marks from a spacing between them.

3. Cylinder according to one of claims 1 to 2, **characterized in that** the pairwise spacing between two adjacent reference marks is assigned to the position of one of the two adjacent reference marks, taking into account a direction of movement.

4. Cylinder according to any one of claims 1 to 3, **characterized in that** the spacing marks are equidistant.

5. Cylinder according to any one of claims 1 to 4, **characterized in that** the cylinder has a rest position and that the pairwise spacing between the reference marks lying adjacent to the rest position is smaller than the pairwise spacing of reference marks lying further away from the rest position.

6. Cylinder according to one of claims 1 to 5, **characterized in that** the marking provided on the piston rod comprises reference and/or spacing marks applied to the piston rod.

7. Cylinder according to any one of claims 1 to 6, **characterized in that** the marking arranged on the piston rod exhibits a continuous coating which is interrupted for the reference and/or distance marks.

## Revendications

1. Cylindre doté d'une tige de piston et d'un capteur de position optique (10), qui est dirigé vers un marquage (12) disposé sur la tige de piston, dans lequel le capteur de position est conçu de manière à détecter la position de la tige de piston par incréments à partir d'un repère de référence, et le marquage présente au moins trois repères de référence (20a - 20f), dont les espacements (26, 28, 30, 32, 34) par paire sont respectivement différents les uns des autres dans la direction axiale,
**caractérisé en ce que**
l'espacement par paire entre deux repères de référence voisins est clairement associé aux positions des deux repères de référence et que des repères d'espacement (22) sont prévus entre deux repères de référence pour une mesure incrémentielle de l'espacement entre les deux repères de référence, dans lequel tous les repères d'espacement présentent respectivement une première largeur dans la direction axiale et tous les repères de référence présentent respectivement une seconde largeur différente de la première largeur dans la direction axiale.

2. Cylindre selon la revendication 1, **caractérisé en ce que** le capteur de position est conçu de manière à déterminer les positions d'une paire de repères de référence à partir d'un espacement entre eux.

3. Cylindre selon l'une des revendications 1 à 2, **caractérisé en ce que** l'espacement par paire entre deux repères de référence voisins est associé à la position de l'un des deux repères de référence voisins compte tenu d'un sens de déplacement.

4. Cylindre selon l'une des revendications 1 à 3, **caractérisé en ce que** les repères d'espacement sont disposés à équidistance.

5. Cylindre selon l'une des revendications 1 à 4, **caractérisé en ce que** le cylindre présente une position de repos et que l'espacement par paire entre les repères de référence situés à proximité de la position de repos est inférieur à l'espacement par paire de repères de référence plus éloignés de la position de repos.

6. Cylindre selon l'une des revendications 1 à 5, **caractérisé en ce que** le marquage disposé sur la tige de piston présente des repères de référence et/ou d'espacement appliqués sur la tige de piston.

7. Cylindre selon l'une des revendications 1 à 6, **caractérisé en ce que** le marquage disposé sur la tige de piston présente un revêtement continu, qui est interrompu pour les repères de référence et/ou d'espacement.
